# EUROPEAN PATENT SPECIFICATION

(11) **EP 3 045 406 B1**
(45) Date of publication and mention of the grant of the patent: **26.05.2021**
(21) Application number: 16150895.7
(22) Date of filing: 12.01.2016
(51) Int. Cl.: B65D 85/804, B29C 45/73, B29C 45/78, B29C 45/26, A47J 31/40

(54) **METHOD AND APPARATUS FOR THE CONSTRUCTION OF CONTAINERS OF PRECURSORS OF LIQUID FOOD PRODUCTS, AND CORRESPONDING CONTAINERS**
VERFAHREN UND VORRICHTUNG ZUR KONSTRUKTION VON BEHÄLTERN AUS VORLÄUFERN VON FLÜSSIGEN LEBENSMITTELPRODUKTEN UND ZUGEHÖRIGE BEHÄLTER
PROCÉDÉ ET APPAREIL POUR LA CONSTRUCTION DE RÉCIPIENTS DE PRÉCURSEURS DE PRODUITS ALIMENTAIRES LIQUIDES ET RÉCIPIENTS CORRESPONDANTS

(30) Priority: 14.01.2015 IT TO20150035
(43) Date of publication of application: 20.07.2016
(73) Proprietor: Ruffa, Gabriele, 13041 Bianze (VC) (IT)
(72) Inventor: RUFFA, Gian Luca, I-13041 Bianzè (VC) (IT)
(74) Representative: Gallarotti, Franco

(56) References cited:
- EP-A2- 1 512 513
- WO-A1-2014/097039
- WO-A2-2009/050570

## Description

### Field of the invention

The present invention relates to containers of precursors of liquid food products and has been developed with particular reference to methods for injection moulding of these containers. The invention finds preferred application in the sector of capsules (or cartridges) for the preparation of beverages, in particular coffee.

### Prior art

The use of disposable capsules in the field of preparation of liquid food products via automatic machines is widespread.

A first type of capsules envisages a sealed body, containing a dose of a precursor that can form a liquid product by means of water and/or steam. The capsule basically consists of a body made of thermoplastic material that is compatible with foodstuffs, which is shaped like a frustoconical cup, containing the aforesaid dose of precursor and is closed at the top by a sealing membrane. The precursor is typically in granular, powdered or fragmented form, such as for example ground coffee or a soluble substance. In use, the bottom of the plastic body and the sealing membrane are perforated by means of purposely provided elements of the automatic machine in the course of preparation of the liquid product: enabled in this way is injection of the hot water and/or steam under pressure into the capsule and the flow from the latter of the product that results from mixing of the fluid injected with the precursor. The body of these cartridges is in general obtained via thermoforming, starting from polypropylene, possibly co-extruded with EVOH.

In a second type of solution, to which the present invention relates in a preferred way, the capsule is not sealed. In such solutions, the body of the capsule has a substantially cylindrical peripheral wall and an openwork bottom, which define the cavity that is to receive the dose of precursor. The body is closed at its top by means that are permeable to water and/or to steam, typically comprising a perforated plastic wall and/or a filter element made of paper or fabric. For operation of these perforated capsules, then, the corresponding machines for preparing beverages or the like do not necessarily have perforating elements: the water and/or the steam can be introduced freely through the aforesaid permeable means, and the liquid food product obtained can flow out through the holes preformed in the bottom of the capsule. The peripheral wall of these capsules is only slightly frustoconical: the inclination of the peripheral wall, which is very contained, basically has the purpose of enabling, during production, extraction of the plastic body of the capsule from the corresponding mould. The body of these capsules is in fact formed by injection moulding, typically using polypropylene as starting material.

The capsules of the two types referred to are very widespread and enable various types of liquid food products (such as coffee, tea, chocolate, broths, soups, etc.) of good quality to be obtained in a simple, fast, and hygienic way. The fact that the body of these capsules is made of non-biodegradable thermoplastic materials entails, however, problems linked to the disposal of these materials after their use. The possibility of disposing effectively of the spent capsules is an increasingly felt requirement, also in view of the high volumes of consumption of this type of products, and it would thus be desirable to resort to compostable materials in order to obtain the body of the capsules.

The features that a material must possess for it to be defined as "compostable" are set down in the European standard EN 13432 *"Requirements for packaging recoverable through composting and biodegradation. Test scheme and evaluation criteria for the final acceptance of packaging",* to which the reader is referred. Here it will suffice to recall that a material, to be qualified as "compostable", must be biodegradable (i.e., at least 90% of the material must degrade within 6 months if it is subjected to an environment rich in carbon dioxide) and must be disintegrable (i.e., following upon contact with organic materials for a period of 3 months, the mass of the material must be constituted at least for 90% by fragments having a size of less than 2 mm). A compostable material must not then have negative effects on the composting process, must have a low concentration of heavy metals added to the material, must have pH values and values of saline content within established limits, and must have concentration of volatile solids, of nitrogen, phosphorus, magnesium, and potassium within established limits.

Known to the prior art are various compostable materials, of different origin, such as, for example, polymers obtained from biomass (for example, Mater-Bi™ produced by Novamont, Italy), synthetic polymers such as polylactic acid derived from the fermentation of starch (for example, BIO-FLEX™ produced by FKuR Kunststoff GmbH, Germany), polymers produced by genetically modified micro-organisms or bacteria, such as polyhydroxyalkanoates (for example MIREL™, produced by Metabolix, USA), aliphatic-aromatic co-polyesters (for example, ECOFLEX™ produced by BASF, Germany), and so forth.

Notwithstanding the availability of compostable materials, the production of capsules for the preparation of liquid products with these materials is not yet widespread on account of the difficulty of moulding adequately bodies which have the sectional dimensions typical of these articles (indicatively between 1 mm and 1.5 mm) and must, however, be able to stand up to relatively high temperatures and pressures, even higher than 100°C and 10 bar.

WO 2014/097039 discloses a capsule for preparation of liquid food products having a body formed at least in part using a compostable material, obtainable via injection moulding.

WO 2009/050570 discloses methods and apparatuses for compression moulding or injection compression moulding of capsules for liquid food products, using plastic or metallic materials.

EP 1512513 A2, upon which the preamble of claims 1 and 10 are based, discloses methods and apparatuses for injection moulding of generally elongated objects, using plastic materials.

### Summary and object of the invention

In view of what has been set forth above, the object of the present invention is to propose a new method and new equipment that will enable injection moulding of compostable materials for the purposes of producing containers for precursors of liquid food products, prearranged for use in machines for preparing such liquid food products of a type available on the market. An associated purpose of the invention is to obtain capsules for precursors of liquid food products, in particular for use in machines for preparing liquid food products of a commercially available type, which have a main body made of compostable material, classifiable as packaging recoverable by means of composting and biodegradation, in particular in compliance with the standard EN 13432. An auxiliary object of the invention is to propose such a method, such equipment, and such a capsule that will be devised in a simple and inexpensive form.

According to the invention, one or more of the aforesaid objects is/are achieved by a method, an apparatus, and a capsule which have the characteristics of the annexed claims, these claims forming an integral part of the technical teaching provided herein in relation to the invention.

### Brief description of the drawings

The characteristics and advantages of the invention will emerge clearly from the ensuing detailed description, which is provided with reference to the annexed drawings, presented purely by way of nonlimiting example, wherein:
- Figure 1 is a schematic perspective view of a container for precursors of liquid food products according to an embodiment of the invention;
- Figure 2 is a schematic view from beneath of the container of Figure 1;
- Figure 3 is a schematic cross-sectional view of the container of Figure 1;
- Figure 4 is a schematic representation of an apparatus for injection moulding of containers for precursors of liquid food products according to an embodiment of the invention;
- Figures 5-8 are schematic perspective cross-sectional views, from different angles, of portions of a mould forming part of an apparatus according to an embodiment of the invention; and
- Figures 9 and 10 are schematic cross-sectional views, similar to that of Figure 3, of containers according to possible variant embodiments of the invention.

### Description of preferred embodiments

Reference to "*an embodiment*" or "*one embodiment*" in the framework of the present description is intended to indicate that a particular configuration, structure, or characteristic described in relation to the embodiment is comprised in at least one embodiment. Hence, phrases such as "*in an embodiment*" or "*in one embodiment*" and the like, that may be present in various points of the present description do not necessarily refer to one and the same embodiment. Furthermore, particular conformations, structures, or characteristics can be combined in any adequate way in one or more embodiments. The references used herein are merely for convenience and hence do not define the sphere of protection or the scope of the embodiments.

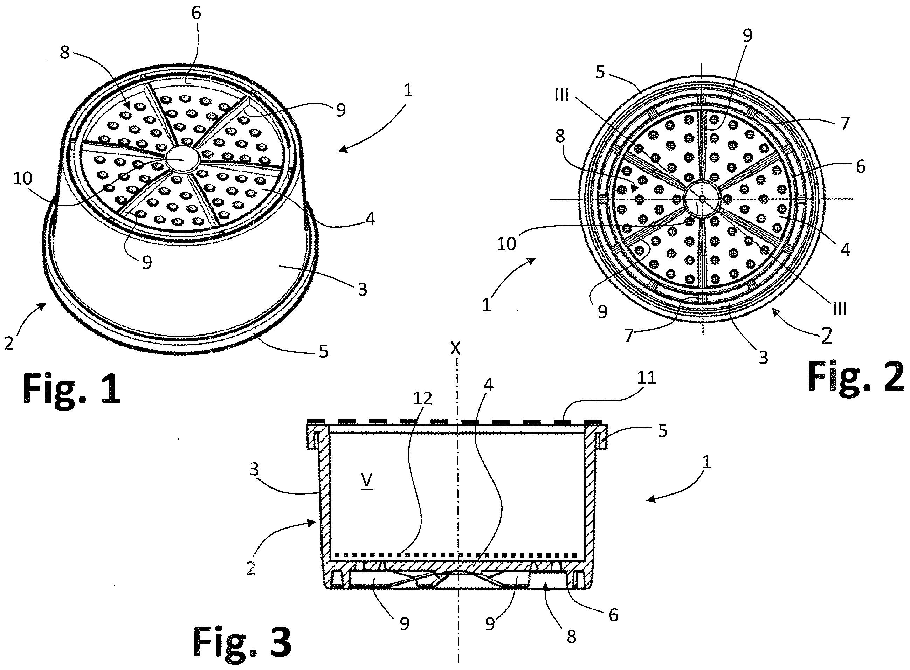

Represented schematically in Figures 1-3 is a container for a food substance, in particular a precursor of a liquid food product, obtained according to the present invention. In the preferred embodiment, the container is a capsule, designated by 1, which is to contain the precursor of a beverage, which here is assumed as being ground coffee. Obviously, not excluded from the scope of the invention are other precursors, such as for example other substances for infusion, or soluble or lyophilized substances for the preparation of products such as tea, chocolate, tisanes, broths, soups, etc. via infusion, percolation or dissolution.

The capsule 1 comprises a substantially cup-shaped body 2, having a longitudinal axis, designated by X only in Figure 3. The body 2 includes a substantially cylindrical peripheral wall 3, a bottom 4 - in the proximity of an axial lower end of the wall 3 - and a flange 5 - here in the form of a collar - integral with the axial upper end of the wall 3. In a preferred embodiment, the wall 3 is a non-perforated wall, whereas the bottom 4 has an openwork structure; i.e., it has a plurality of through holes. The wall 3 is here defined as "substantially cylindrical" in so far as it is preferentially slightly frustoconical, for the reasons already referred to in the introductory part of the present description.

Projecting downwards from the bottom 1 is an annular wall 6, which is substantially cylindrical and coaxial to the wall 3, having a diameter smaller than the latter: thus defined between the walls 3 and 6 is an annular interstice (not indicated), preferably extending in which are radial walls or formations 7 (Figure 2), which connect the walls 3 and 6 together. The presence of the two coaxial cylindrical walls 3 and 6 in the lower part of the body 2 enables, albeit with modest wall thicknesses, strengthening of the bottom 4 in order to prevent excessive deformation thereof in the event of softening of the material constituting the body 2. The aforesaid strengthening can be increased thanks to the radial walls 7 (where envisaged).

The bottom 4 and the wall 3 define a first spatial region, represented by a volume V (Figure 3), axially comprised between the bottom 4 and the axial upper end of the wall 3, which can house a granular, powdered, or fragmented substance (not represented), which provides a precursor for the production of a liquid product using water and/or steam. The wall 3 defines with the bottom 4 a second spatial region, constituted by a disk-shaped recess 8, located in which are the annular wall 6 and a plurality of ribs 9, which are also integral with the bottom 4. The ribs 9 have a radial orientation, are set at equally spaced angular distances apart, and extend between the wall 6 and an axial projection 10, which is also integral with the bottom 4 and situated in the recess 8. The projection 10 is preferably disk-shaped and shares the axis X of the body 2. The ribs 9 divide the area delimited by the wall 6 into a plurality of sectors, which are preferably identical to one another and are each delimited by two adjacent ribs 9 and by a respective portion of the wall 6. The bottom 4 comprises a plurality of through holes (not indicated), divided into a number of distinct arrays or groups, preferably provided only in the aforesaid sectors. The through holes are preferentially arranged in way such a way that none of them borders on one of the ribs 9 or on the wall 6 in order to prevent any perturbation of the flow of liquid product as it exits from the bottom 4 of the capsule.

From Figure 3 it may be clearly noted how, in a preferred embodiment, the lower ends of the walls 3 and 6 lie substantially in one and the same plane. In this way, precise resting of the capsule 1 is favoured when it is used in a machine for automatic preparation of liquid products. Resting of both of the walls on one and the same surface of the machine enables any possible downward deformation of the bottom 4, which could be caused by the temperature and pressure of the fluid introduced into the capsule 1, to be countered. The strengthening and/or support is further increased by the ribs 9, the lower edges of which may also have at least one stretch that lies in the plane common to the lower ends of the walls 3 and 6. In the preferred embodiment, the cross section or thickness of the various parts of the body 2 (walls 3, 6, bottom 4, collar 5, ribs 9, etc.) do not exceed 1.2 mm.

The capsule 1 further comprises an upper closing element 11 (Figure 3), which is preferably permeable and constituted, for example, by a circular film or layer of paper or fabric for filters, which is fixed to the flange 5, for example via heat-sealing or gluing. Also preferentially provided in the proximity of the bottom 4, within the volume V, is a filter element 12 made of paper or fabric for filters, which is set between the bottom 4 and the dose of substance contained in the volume V.

The body 2 of the capsule 1, which defines in a single piece the wall 3, the bottom 4 (with the parts 6, 7, 9, and 10 integral thereto), and the flange 5, has a substantially rigid structure and is formed via injection moulding with a compostable material compatible for food uses. The compostable material used can be of any suitable type that is commercially available, for example but not necessarily selected from the ones mentioned in the introductory part of the present description.

In a preferred embodiment, the compostable material is a polymeric mixture with a base of polylactic acid, a thermoplastic aliphatic polyester. Preferentially, the material used has a base of laevorotatory poly-L-lactic (PLLA) acid, in particular obtained starting from sugar beet, in a mixture with commonly used fillers and additives and/or with at least one biodegradable polyester.

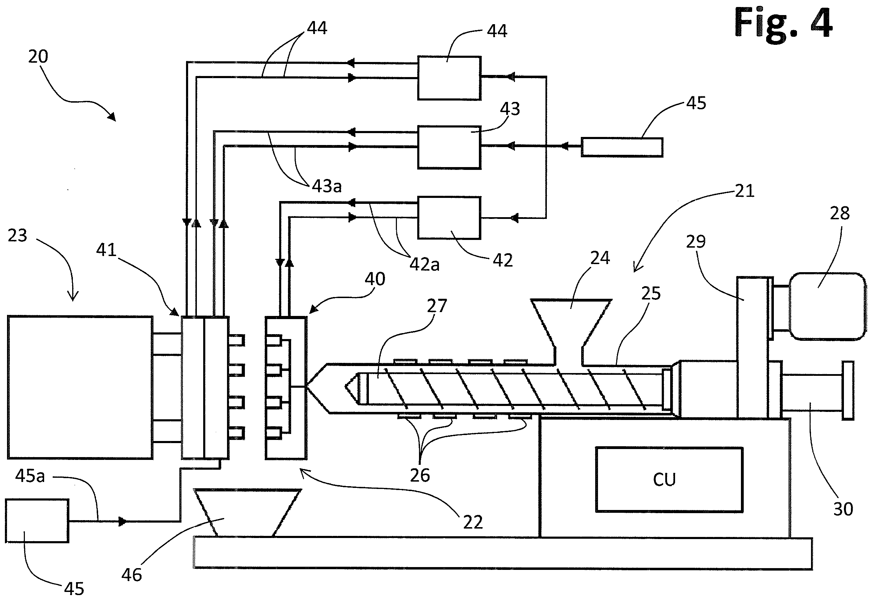

Figure 4 is a schematic illustration of an apparatus for injection moulding of the body 2 of the capsule 1, designated as a whole by 20, which comprises an injection unit 21, a mould 22, and a mould-closing unit 23. As usual, the apparatus 20 further comprises a control unit CU, electric motors, and a hydraulic system. The injection unit 21 enables plastification and injection of the compostable material. The material, in granular form, is fed through a hopper 24 into a cylinder 25 heated by electrical heating elements 26, which enable regulation of the temperature thereof. The material thus heated is melted and is entrained forwards by the rotary movement of a worm-screw 27, which can preferably also slide in the cylinder 25, and is then injected into the mould 22 through a nozzle, with a movement of advance of the worm-screw itself. For this purpose, the screw 27 is driven in rotation by means of an electric motor 28, with associated gear reducer 29, and can slide axially thanks to the action of a hydraulic cylinder 30, which has the task of regulating the movements of the screw 27 both in the plastification step and in the injection step. The mould 22 bears the cavities that will give shape to the body 2 of the capsules and the corresponding channels for feeding the material in the molten state, as well as a conditioning system, an extractor or expeller system, and, preferably, a fluid (preferably gas) cooling system, described in detail hereinafter. The mould 22 basically comprises a movable mould part, or male part, and a fixed mould part, or female part, on which the cavities are provided. The closing unit 23 has the function of keeping the mould 22 closed throughout the injection step and pressurization step and of opening it at the moment of extraction of the capsule bodies formed. The unit 23 can be of any known type and comprises, for example, a supporting plate, firmly fixed to the base of the apparatus 20, a stationary fixing plate, which is also fixed with respect to the apparatus, to which the female mould part is applied, and a movable fixing plate, to which the male mould part is applied, which is guided by columns in its displacement forwards and backwards. The fixing plates are preferentially provided with centring holes for positioning rings for the two parts of the mould. Driving of the plates is preferably hydraulic.

Designated by 40 in Figure 4 is the fixed mould part, i.e., the female part, in which a plurality of cavities are preferably defined to obtain capsule bodies, for example sixteen cavities. Designated by 41 is the movable part of the mould, i.e., the male part, which bears a series of cores that can each be received in respective cavities.

The apparatus used for the purposes of implementation of the invention comprises a fluidic heating system for heating of the mould part 40, prearranged for heating at least one surface of the corresponding cavities, and a fluidic cooling system for cooling of the mould part 41, prearranged for cooling at least one outer surface of the corresponding cores. For this purpose, in an embodiment, such as the one exemplified, a plurality of thermoregulation units are provided, designated by 42, 43 and 44, prearranged for causing a fluid - more in particular a liquid - to circulate in the purposely prearranged parts 40, 41 of the mould. The aforesaid units comprise a pumping device, an arrangement for detection and regulation of the pressure of the fluid set in circulation, and an arrangement for detection and regulation of the temperature of the fluid. In particular, designated by 42 is a thermoregulation unit which is designed to cause a heating fluid to circulate in the mould part 40, where each cavity is present, by means of respective delivery and return lines 42a. Designated, instead, by 43 and 44 are two similar groups, which have the function of causing a cooling fluid to circulate in the mould part 41, at each core, via respective delivery and return lines 43a and 44a.

It may be noted that the provision of two cooling units 43 and 44 is not strictly indispensable, there possibly being provided for circulation of the fluid in the movable mould part 41 also just one thermoregulation unit. The use of two units 43 and 44 proves advantageous in the case where it is desired to carry out a thermal conditioning differentiated according to the different areas of each core. It may be noted that also the fixed mould part 40 can be served by at least two different thermoregulation units in the case where it is desired to carry out a thermal conditioning differentiated according to the different areas of each cavity.

The liquid set in circulation by the units 42, 43 and 44 may for example be water, or an oil, or a glycol, and not excluded from the scope of the invention is the case where a liquid of one type, for example water, is made to circulate in the mould part 40, and a liquid of a different type, for example an oil or glycol in the mould part 41. The aforesaid measure can prove useful in view of the fact that the mould parts are conditioned in a way different or opposite to one another, so that the use of liquids that have a different inertia or thermal conductivity may prove advantageous. It is also possible that in the circuit of the unit 43 a fluid is present different from the one present in the circuit of the unit 44.

In a preferred embodiment, the thermoregulation units are connected to a source SF of the fluid set in circulation. In the case exemplified, it is assumed that the fluid is water and that the source SF is a water source, preferably demineralized or decalcified. The connection to the water source SF is provided for enabling - if need be - topping-up of the heating and cooling circuits, given that part of the liquid is lost over time, for example by evaporation.

In a preferred embodiment, the equipment used for the purposes of implementation of the invention comprises an arrangement for generating and directing a flow of a cooling fluid, preferably a gas, onto the capsule body 2 formed via the mould 22. Preferentially, at least one part of the aforesaid arrangement is associated to the movable mould part 41, very preferably to an ejector plate thereof. In the embodiment exemplified, the aforesaid arrangement comprises a unit 45 for delivering to the mould part 41 (purposely pre-arranged) a flow of a gas, for example compressed air, via a respective supply line 45a. The unit 45 may comprise, for example, a pump or a compressor. In a possible embodiment, the unit 45 is prearranged for conditioning, in temperature, of the gas, in particular for cooling it.

Finally, designated by 46 is a hopper, set underneath the mould 22, for collection of the moulded capsule bodies that are each time removed from the mould 22.

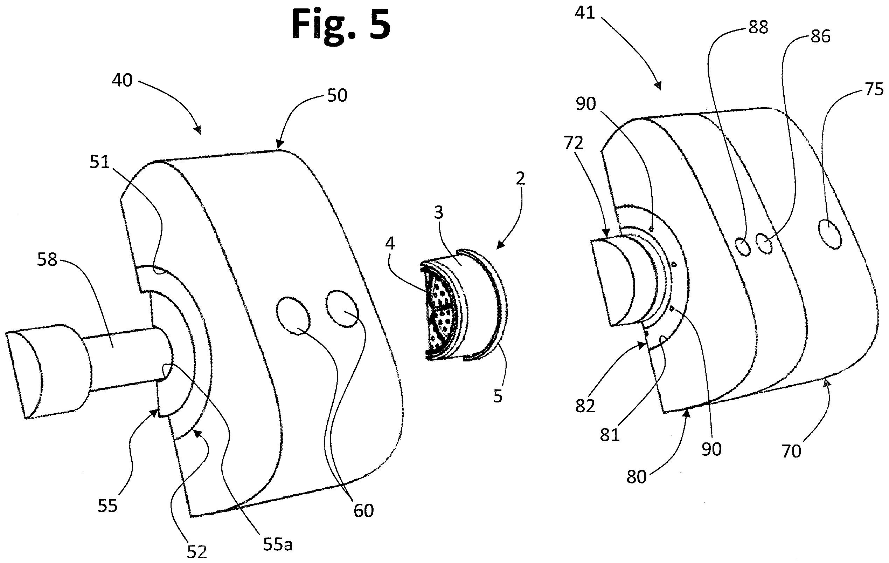

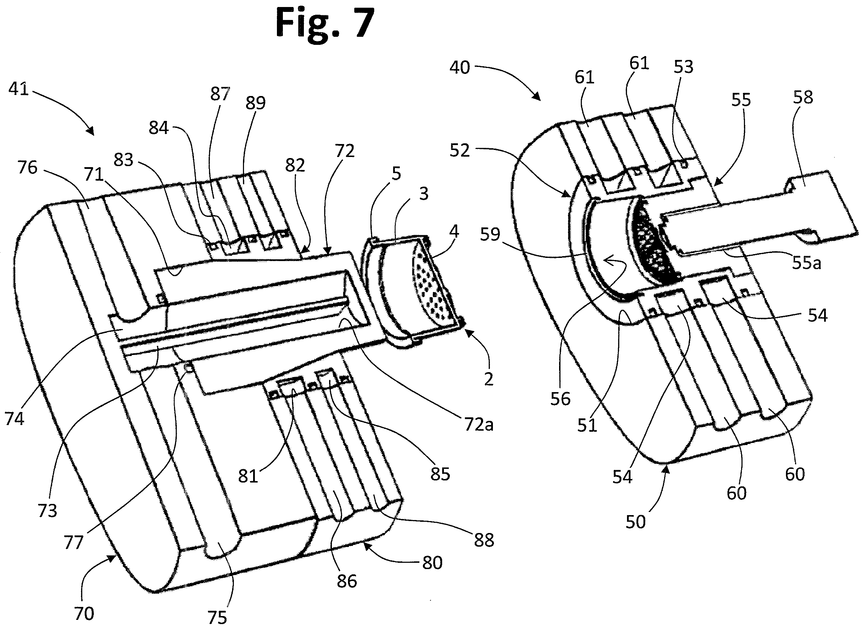

Represented with different views in Figures 5-8 are a portion of the fixed mould part 40 and a corresponding portion of the movable mould part 41, according to a possible embodiment of the invention. As has been said, the mould 22 preferably comprises a plurality of cavities and of corresponding cores. For greater clarity, Figures 5-8 illustrate just one portion of the mould part 40, with a corresponding cavity, and a corresponding portion of the mould part 41, with a corresponding core. In what follows, reference will be then made to just the portions illustrated, taking, however, for granted that the mould 22, at each cavity and core, is of a conception similar to the one represented in Figures 5-8. It may likewise be noted that the mould parts of Figures 5-6 are sectioned according to a plane substantially perpendicular to the plane of cross section of Figures 7-8.

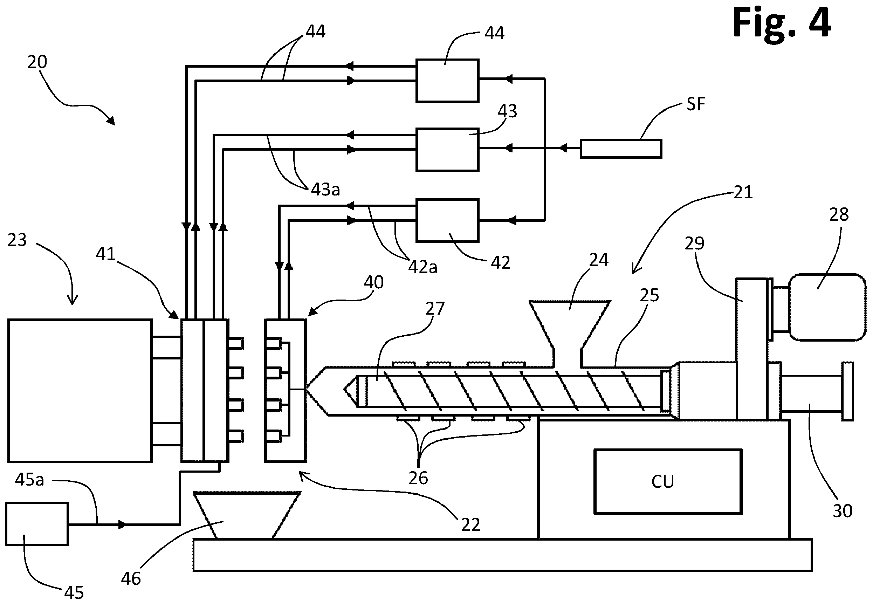

In a preferred embodiment, the fixed mould part 40 comprises a first metal plate 50, defined in which is a plurality of cylindrical cavities or seats (one of which is designated by 51) in a number corresponding to that of the cavities. Sealingly fixed in each seat 51 is a substantially cylindrical and axially hollow metal insert, designated by 52. Defined at the peripheral surface of the insert 52 are at least one annular groove and, preferentially, a series of annular housings. In the example illustrated, three housings are provided, designated by 53 in Figure 6, which are substantially the same as one another, and two grooves, designated by 54, again substantially the same as one another. The annular housings 53 are provided for positioning respective sealing elements (not represented), for example of the O-ring type. The groove or grooves 54 has/have a depth greater than that of the housings 53. Both the housings 53 and the grooves 54 are made in the form of circumferential channels of the insert 52; preferentially, each groove 54 is in an intermediate position with respect to two housings 53.

In one embodiment, fitted in the cavity of the insert 52, on its rear part, is a second, substantially cylindrical, metal insert 55, the front face of which defines the bottom of the cavity, designated by 56, which is to determine the profile of the underside surface of the bottom 4 of the capsule body 2. The part of the axial cavity of the insert 52 not occupied by the insert 55 defines, instead, the peripheral surface of the cavity 56, which is to determine the outer profile of the wall 3 of the capsule body 2. The insert 55 may, for example, be driven into the insert 52, or else interference-fitted therein. Preferentially, the axial cavity of the insert 52 defines a step, designated by 57a only in Figure 6, at its rear end, which provides a contrast surface for a corresponding flange part of the insert 54, this flange part being designated by 57b only in Figure 6.

In a preferred embodiment, the insert 55 has a blind cavity 55a, partially housed within which is at least one nozzle 58 forming part of an injection system of a type in itself known, preferably of the hot-channel type. In a preferred embodiment of the mould part 40, provided behind the plate 50 is a further plate, defined in which are the seats for the nozzles 58 and the hot-channel system. In an embodiment of this type, preferably provided between the plate 50 and the further plate is a layer of thermally insulating material, for example a ceramic material, for countering the transmission of heat between the further plate and the plate 50.

The cavity 55a has a port (not represented), which opens at the front face of the insert 55, which constitutes the point for injection of the molten material into the cavity 56. The aforesaid port preferably occupies a central position; i.e., taking as reference the bottom 4 of the capsule body 2, it is located at the axial projection 10 (see Figures 1-2) of the capsule body 2. Defined at the front end of the cavity 56, in the insert 52, is a groove 59, necessary for formation of the flange 5 of the capsule body 2.

In the assembled condition, then, the inserts 52 and 55 set in a fixed position define between them the cavity 56. The insert 52 is sealingly mounted in the corresponding seat 51 of the plate 50 thanks to the action exerted by the seal rings present in the housings 53. On the other side, the grooves 54 define annular channels with the respective facing portions of the surface of the seat 51. Preferentially, at least one annular channel is provided at the portion of the insert 52 not occupied by the insert 55 and another annular channel at the portion of the insert 52 occupied by the insert 55, so as to provide temperature conditioning - as will emerge hereinafter - of both the part of the cavity 56 that is to define the external profile of the wall 3 of the capsule body 2 and the part of the cavity 56 that is to define the bottom 4 thereof.

As emerges, for example, from Figures 7-8, the annular channels defined by the grooves 54 are in fluid communication with respective ducts defined in the plate 50. In particular, designated by 60 are ducts for inlet of the water into the grooves 54, whereas designated by 61 are ducts for outlet of the water from the grooves 54. In the example illustrated, the ducts 60 and 61 are connected to the delivery and return lines 42a of Figure 4 for circulation of the heating water with respect to the thermoregulation unit 42, at a preferably controlled pressure.

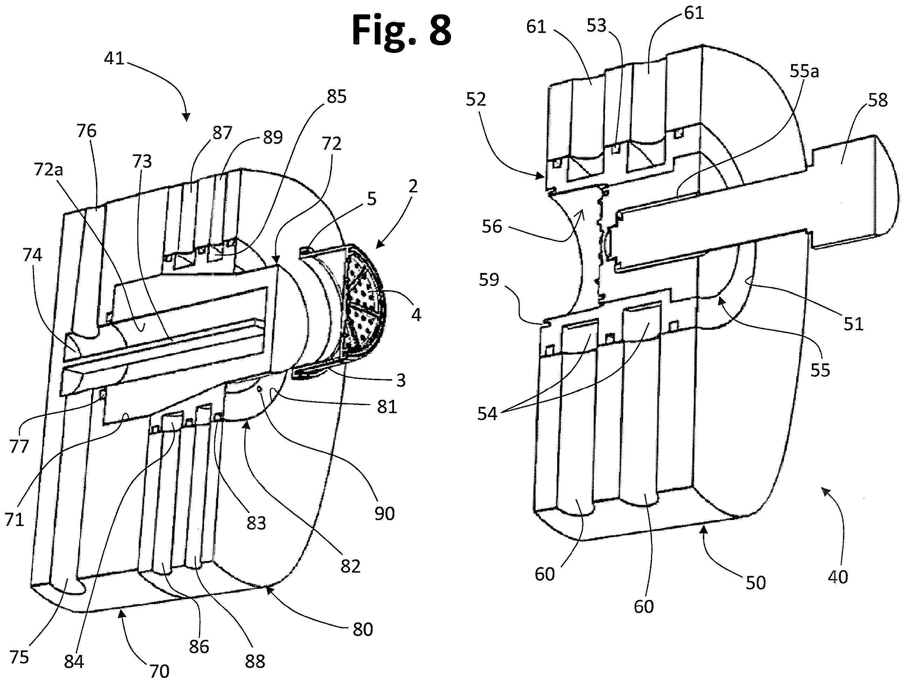

Also the mould part 41 comprises a first metal plate 70, defining a seat or cavity 71 (in particular a blind seat), where a metal core 72 is fixed. Preferentially, the core 72 is hollow and configured for enabling passage of a cooling fluid. In one embodiment, such as the one represented, the core 72 has a cavity 72a that is divided into at least two parts or half-cavities in fluid communication with one another. In one embodiment, such as the one illustrated in Figures 7 and 8, fixed with respect to the plate 70 is a partition wall 73, which extends axially within the cavity 72a of the core 72. The wall 73 preferentially departs from a chamber 74 defined in the plate 70, at the bottom of the seat 71. The chamber 74 is in fluid communication with two ducts 75 and 76 defined in the plate 70, one of which is for delivery of the water and the other for evacuation of the water, these two ducts being connected to the delivery and return lines 43a of Figure 4 for circulation of the cooling water with respect to the thermoregulation unit 43, at a preferably controlled pressure. As may be appreciated, the water at inlet from the duct 75 can then occupy the volume inside the core 72 and then exit via the duct 76. Preferably defined on the bottom of the seat 71 is a housing 77 for a seal ring, for example an O-ring, to provide a seal with respect to the rear end of the core 72.

Designated by 80 is a metal ejector plate, mounted movable with respect to the plate 70 and facing the latter. The ejector plate 80 has a cylindrical through cavity 81, sealingly fixed within which is a substantially cylindrical and axially hollow metal insert 82. In the example illustrated, a portion of the outer surface of the core 72 is markedly conical, and the through cavity of the insert 82 has a corresponding shape, to mate with the core 72, also for the purposes of centring.

The outer surface of the insert 82 is similar to that of the insert 52 of the fixed mould part 40, with a peripheral surface defining one or more annular grooves and, preferably, a plurality of housings. In the example illustrated, a series of housings 83 are provided for respective seal rings, for example O-rings, as well as at least two grooves 84 and 85. Preferentially, the groove 85 closest to the front of the plate 80 has a smaller section than does the groove 86.

Also in this case, in the assembled condition with the insert 82 fixed in the corresponding seat 81 of the plate 80, the seal rings located in the housings 83 function as a seal on the surface of the seat 81, to guarantee sealing thereof, each groove 84, 85 being in a position intermediate with respect to two housings 83. The grooves 84 and 85 define, with the respective facing portions of the surface of the seat 81, annular channels, which are in fluid communication with respective ducts defined in the plate 80. In particular, the groove 84 is in fluid communication with respective ducts 86 and 87 defined in the plate 80, for inlet and outlet of the water. In the example illustrated, the channels 86 and 87 are connected to the delivery and return lines 44a of Figure 4, for circulation of the cooling water with respect to the thermoregulation unit 44, at a preferably controlled pressure.

Also the annular channel defined by the groove 85 is in fluid communication with respective inlet and outlet ducts, designated by 88 and 89. In this case, the aforesaid ducts and channel are provided for passage of a flow of a cooling fluid, preferably a gas that is here assumed as being air. For this purpose, departing from the groove 85 is a series of holes, which give out at the front of the insert 82 and are arranged around the core 72, preferably according to a circumference of diameter greater than that of the groove 59 necessary for formation of the flange 5 of the capsule body 2. Some of the aforesaid holes are designated by 90 in Figures 5 and 8. The holes 90 have a relatively restricted section of passage, in any case smaller than that of the annular channel defined by the groove 85. The duct 88 is connected to the delivery line 45a of the unit 45 of Figure 4.

In possible variant embodiments, the grooves 54 of the insert 52 can be replaced by a groove with a helical pattern. In the above embodiment, just one inlet duct 60 and just one outlet duct 61 are sufficient, each in fluid communication with an end of the helical channel thus defined. Also the annular groove 84 of the insert 82 may possibly be replaced by a helical groove.

According to the invention, in the course of each moulding operation (closing of the mould, injection of material, holding time, opening of the mould, ejection of the piece), the heating fluid is made to circulate in the part of mould that defines the cavities, and the cooling fluid is made to circulate in the other part of mould, in particular where the cores are present. In the preferred embodiment, the heating fluid is heated and made to circulate continuously in the course of operation of the apparatus 20, i.e., in the course of the succession of the moulding operations performed to obtain a production lot. By the way, the heating and circulation of the heating fluid could be determined only in some steps of each moulding operation, and especially in the course of closing of the mould 22, during injection of the material, during the holding period, and in the course of opening of the mould 22. The cooling fluid is preferentially cooled and made to circulate over a limited period of each moulding operation, in particular at least during opening of the mould 22, ejection of the capsule body 2 from the corresponding core 72 and, preferentially, also in a terminal step of the holding period, prior to opening of the mould 22.

The two fluids are thermoregulated via the respective units 42 and 43-44 at substantially constant temperatures. In particular, the heating fluid is made to circulate at a temperature of between 80°C and 100°C, preferably between 88°C and 97°C, very preferably between 90°C and 95°C. The cooling fluid is made to circulate at a temperature lower than 12°C, preferably lower than 10°C, very preferably not higher than 8°C, in the course of the aforesaid limited period of each individual moulding operation. The effect of the heating fluid is to keep the peripheral surface and/or the bottom surface of the cavities 56 at a substantially constant temperature, whilst the cooling fluid is used for cooling the outer surfaces of the core 72 at least temporarily.

According to a particularly advantageous embodiment, in the course of at least one of the step of opening of the mould 22 and the step of ejection of the capsule body 2 from the core 72, the flow of the gas or other cooling fluid referred to above is directed onto the capsule body in order to facilitate hardening of the material of the capsule body.

A preferred example of operation of the equipment for injection moulding 20 of Figure 4 is described in what follows.

The compostable material in granular form or in pellets is fed via the hopper 24 to the cylinder 25. The material preferably has a base of laevorotatory poly-L-lactic acid in a mixture with fillers, additives, and at least one biodegradable polyester commonly used in the sector of compostable materials.

The heating elements 26 can be controlled for heating the cylinder 25, according to temperature profiles that vary according to the type of material used, bringing about melting thereof. On the other hand, in a preferred embodiment, for example in the case of use of the compostable material referred to above, the temperature of the various heating elements 26 is kept substantially the same and constant, for example comprised between 175°C and 185°C; the temperature of the heating elements of the injector nozzles may be between 190°C and 210°C.

The molten material is injected into the mould 22, which is closed (i.e., with the two mould parts 40 and 41 set up against one another by means of the closing unit 23) and with the cores 72 inserted in the corresponding cavities 56, thereby defining the various moulding chambers. In the above step, the speed of rotation of the screw 27 and its advance are governed by the control unit CU of the equipment, which controls the motor 28 and the cylinder 30 in order to obtain filling of the individual moulding chambers together with the injection system, preferably a hot-channel system.

The cycle time, i.e., from when the injection of the molten material into the moulding chamber starts up to ejection of the capsule body from the corresponding core, is preferentially not longer than 20 s, in particular not longer than 18 s. As has been said, the heating water is thermoregulated at a substantially constant temperature and made to circulate continuously in the mould part 40 in the course of the entire moulding operation, by way of the fluidic heating system including elements previously designated by 42, 42a, 51-54, 60, 61. The unit 42 causes the water to circulate, for example, at a temperature of 95°C.

The time for injection of the material into the moulding chamber is indicatively comprised between 2 and 4 s, in particular between 2.5 and 3 s. With this injection, the chamber is filled with the molten material, according to modalities in themselves known. Preferentially, the speed of injection of the material in the molten state is relatively low, indicatively not higher than 80 mm³/s; preferably not higher than 70 mm³/s. Once again preferentially, also the pressure of injection is relatively low, indicatively not higher than 500 bar, preferably not higher than 400 bar, and very preferably between 250 and 350 bar, for example approximately 300 bar.

This is followed by the holding step, in the course of which crystallisation of the injected material starts. Once the injection is completed, the molten material present in the mould 22 solidifies and shrinks slightly. Preferentially, then, with the holding step a substantially constant pressure is maintained within the mould 22, thus compensating for the volumetric shrinkage with the introduction of other molten material. The holding time is preferably not longer than 10 s, very preferably not longer than 8 s. Next, the mould 22 is opened, with the core 72 that in effect extracts the capsule body 2 from the cavity 56; next, the capsule body 2 is ejected by the core 72 by means of the ejector plate 80.

The fluidic cooling system including the elements previously designated by 43, 43a, 44, 44a, 72a, 73-76, 81-84, 86, 87 brings about cooling of the core 72 in the course of at least one of the step of opening of the mould 22 and the subsequent step of ejection of the capsule body 2 from the core 72. In a preferred embodiment, in any case, cooling of the core 72, i.e., circulation of the cooling fluid, starts before the mould 22 is re-opened, i.e., in a terminal period of the holding step. The total time of cooling of the core 72 is preferentially not longer than 5 s, preferably comprised between 3 and 4 s, divided between the end of the holding period (for example 2 s), the opening of the mould (1 s), and the ejection of the piece (1 s). The units 43 and 44 cause the cooling water to circulate, for example, at a temperature lower than 9°C.

As may be seen, in the course of at least one part of each individual moulding operation, a heating fluid is made to circulate in the part of mould defining the cavities, and simultaneously a cooling fluid is made to circulate in the part of mould defining the cores. Preferentially, circulation of the cooling liquid is interrupted in the course of the injection step and at least for a prevalent part of the holding step, and preferably also during the step of closing of the mould.

The ejection of the piece from the core 72 is obtained by the ejector plate 80, which is moved away, according to known modalities, from the plate 70 of the mould part 41. The plate 80 - to which the tubes of the lines 43a, 44a and 45a are obviously connected - then causes the capsule body 2 to slide out of the core 72 and then fall into the collection hopper 46.

After the mould 22 has been opened, or in the course of its opening, the arrangement provided for generating and directing the flow of cooling air is activated, including the elements 45, 45a, 81-83, 85, 88-90. The control unit CU then governs the unit 45 so as to generate the flow that exits from the holes 90 of the insert 82 carried by the ejector plate 80. The sub-flows at outlet from the holes 90 are directed onto the capsule body 2, favouring cooling thereof, its further solidification, and its detachment from the core 72. Blowing-in of air is performed preferentially in the course of the step of ejection of the piece, performed by the ejector plate 80. As has been mentioned, the unit 45 can be configured for regulating the temperature of the airflow. As has been said, in the step of opening of the mould 22 and in the step of ejection from the core 72, the cooling water preferentially circulates in the latter.

After or during re-closing of the ejector plate 80, the control unit CU interrupts operation of the unit 45 and controls the units 43 and 44 for the purposes of interruption of the circulation of the cooling fluid.

After a few instants (1-2 s) following upon actuation of the ejector plate 80, the mould 22 is again re-closed, and this is followed by a new injection of material into the moulding chamber, to repeat the cycle already described. It will be appreciated that, after closing of the mould 22, in the course of injection and during most of the holding time, the core 72 tends to heat up on account of the transmission of heat by the mould part 40 and by the molten material. For this reason, as explained, at least in the course of the steps of opening of the mould, of extraction and, preferably, already in the terminal period of the holding step, the control unit CU controls the thermoregulation units 43, 44 for activating circulation and thermostatting of the cooling fluid, in order to cool the core 72 again. After extraction from the mould, the capsule bodies 2 are left to rest preferably at room temperature in order to enable completion of crystallisation of the material. The resting time may for example last 24 h.

The fact that one or more surfaces of the cavities 56 are maintained at a relatively high temperature (approximately 90-95°C) in the course of the moulding operation has the effect of improving, inside the moulding chamber, the flow of the compostable material, which is typically more viscous or denser than the materials traditionally used for the production of capsule bodies according to the known art (typically polypropylene), as well as improving progression of crystallisation. The maintenance of the cavity at a sufficiently high temperature moreover favours correct orientation of the molecules of the material, and consequently proper crystallisation.

On the other hand, the significant cooling of the core - i.e., the high temperature gradient induced between the cavity and the core (in the case exemplified, the aforesaid gradient is to assume values higher than 75-80°C) - has the effect of causing a fast grip of the capsule body 2 on the core 72, even though the aforesaid body is not yet completely hardened. This in any case enables proper extraction of the capsule body 2 from the cavity 56. Blowing of a cooling fluid directly onto the capsule body 2 in the step of opening of the mould and of ejection further accelerates hardening of the material and favours ejection itself (by contrast, in an ordinary moulding of capsule bodies made of polypropylene, the material crystallises very fast, shrinking on the core in the absence of any differentiated thermal conditioning of the two parts of mould used).

From the foregoing description, the characteristics of the present invention emerge clearly, as likewise do its advantages.

Practical tests conducted by the present applicants have made it possible to ascertain that the method and the equipment described enable formation, with compostable material, of capsules that can be employed in commonly used machines for the preparation of beverages and the like, and in particular coffee, without occurrence of any yielding, notwithstanding the typical conditions of use (temperature of injection of the water even higher than 90°C and pressure higher than 10 bar) and notwithstanding the relatively small wall thicknesses of less than 1.5 mm and in particular of not greater than 1.2-1.3 mm. The apparatus and the method described enable fast and efficient moulding of the capsule bodies, without appreciable waste in terms of rejects.

It will be clear to a person skilled in the art that numerous variations may be made to the method and to the equipment, as well as to the capsules described by way of example herein, without thereby departing from the scope of the invention, as defined in the ensuing claims.

The list of compostable materials mentioned in the present description is provided merely by way of example and is not exhaustive, given that the invention may be implemented also using other types of commercially available compostable materials, in particular obtained by injection moulding. The times referred to above for the various steps of the moulding process may possibly vary according to the characteristics of the material used, as likewise the temperatures of the process.

As has been said, instead of two distinct circuits for cooling the mould part defining the cores, it is also possible to envisage a single circuit. In an embodiment of the type as described before, with two distinct cooling circuits, it is also possible - in the course of a moulding operation - to keep circulation of a cooling fluid always active in one of the two circuits and cause circulation of the other cooling fluid when necessary (opening of the mould, ejection, and preferably terminal period of maintenance).

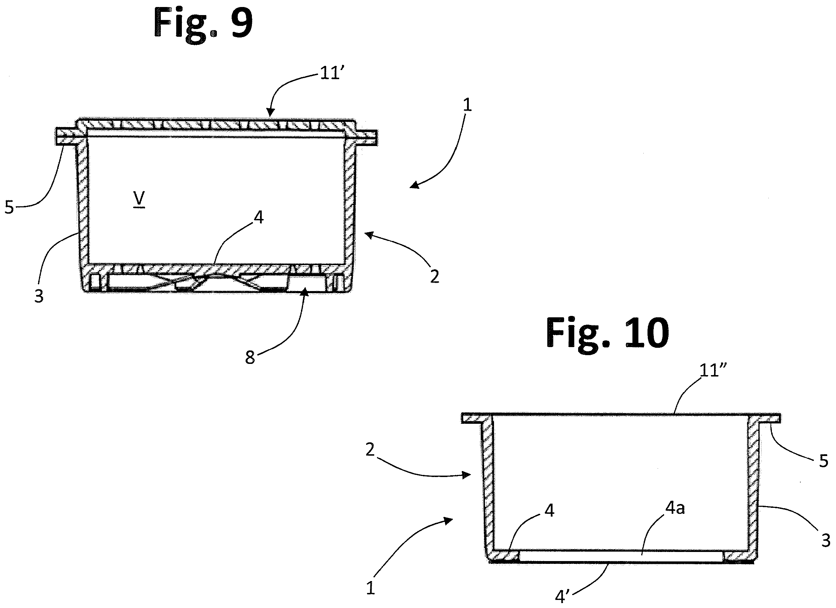

Previously, reference has been made to capsules with a body 2 that is substantially rigid, the closing wall 11 of which is constituted by or comprises a sheet material permeable to the fluid (water and/or steam) for preparation of liquid foodstuffs. The invention may, however, find application also for the production of capsules with a body made up of a number of moulded parts, as exemplified in Figure 9, one part of which is a substantially cup-shaped body 2, obtained as described previously, and the other part is a generally disk-shaped closing lid 11', for example injection moulded or thermoformed, which is also made of compostable material. The lid 11' has one or more through openings and can be coupled to the body 2 - for example, by snap action and/or via welding, in particular ultrasonic welding - at the mouth of the body 2 and/or of its flange or collar 5.

The invention may also be used for the production of sealed capsules, also for substances or products other than precursors for beverages or the like, in which case the bottom of the capsule and its closing wall will be of a non-perforated and/or non-porous type. In a possible embodiment, as exemplified in Figure 10, the upper wall of the capsule 1 can include a first film 11" glued or heat-sealed to the flange 5 of the body 2, and the bottom wall may include a second film 4' glued or heat-sealed to a bottom wall 4 provided with at least one passage 4a, for example a single central passage. The films 4' and 11" may conveniently be films made of compostable material according to known technique, also with a number of layers, at least one of which is impermeable. In a capsule of this type, the films 4' and 11" are to be perforated by purposely provided tips present in an injector device and a capsule-holder of the machine for preparing liquid foodstuffs, according to a technique in itself known.

The cooling fluid directed onto the capsule body may be a cryogenic gas or liquid, such as nitrogen.

## Claims

1. A method for injection moulding of cup-shaped container bodies (2) for precursors of liquid food products, in particular capsules for coffee and soluble products, comprising:
a) providing a first mould part (40) having at least one cavity (56) and a second mould part (41) having at least one core (72), the core (72) being at least partially receivable by the cavity (56) for delimiting therewith at least part of a corresponding moulding chamber;
b) closing the first and second mould parts (40, 41) for delimiting the moulding chamber;
c) injecting a material in the fluid state into the moulding chamber to form the container body (2);
d) waiting for at least partial solidification of the material;
e) opening the first and second mould parts (40, 41), with the formed container body (2) on the core (72); and
f) removing the formed container body (2) from the core (72), wherein, in the course of a moulding operation, a cooling fluid is made to circulate in the second mould part (41) for cooling at least one outer surface of the at least one core (72);
**characterized in that**:
- the material injected in the fluid state into the moulding chamber in the course of step c) is a compostable material, and
- in the course of said moulding operation a heating fluid is made to circulate in the first mould part (40) for heating at least one surface of the at least one cavity (56).

2. The method according to Claim 1, wherein the heating fluid and the cooling fluid are made to circulate simultaneously in the first mould part (40) and in the second mould part (41), respectively, in the course of at least one and the same step of said moulding operation.

3. The method according to Claim 2, wherein said at least one and the same step of the moulding operation comprises at least one of steps d), e) and f).

4. The method according to any one of Claims 1-3, wherein circulation of the cooling fluid is interrupted in the course of step c) and at least for a prevalent part of the step d).

5. The method according to Claim 1, wherein, in the course of at least one of steps e) and f), a flow of a cooling fluid, in particular a gas, is directed onto the formed container body (2).

6. The method according to Claim 1, wherein:
the heating fluid is made to circulate at least in the course of steps b), c), d), and e) for heating said at least one surface of the at least one cavity (56), and
the circulation of the cooling fluid is suspended at least in the course of step c) and, preferably, also in the course of a substantial portion of step d).

7. The method according to claim 8, wherein circulation of the cooling fluid is suspended also during step b).

8. The method according to any one of the preceding claims, wherein:
the heating fluid is thermoregulated at a heating temperature, in particular a substantially constant heating temperature, at least in the course of steps b), c), d), and e); and
the cooling fluid is thermoregulated at a cooling temperature, in particular a substantially constant cooling temperature, in the course of steps e) and f), and preferably also in a terminal phase of step d).

9. The method according to any one of the preceding claims, wherein the compostable material is a mixture with a base of polylactic acid, preferably a mixture with a base of laevorotatory poly-L-lactic acid.

10. Equipment for carrying out the method according to one or more of the preceding claims, comprising:
a mould (22) that includes a first mould part (40) and a second mould part (41), at least one of which is displaceable relative to the other between a position of opening and a position of closing of the mould (22), the first mould part (40) having at least one cavity (56) and the second mould part (41) having at least one core (72) that is receivable at least partially by the cavity (56) for delimiting therewith at least part of a corresponding moulding chamber;
an actuation system (23) for causing displacements between the first mould part (40) and the second mould part (41), between the position of opening and the position of closing of the mould (22);
an injection system (21) for injecting a compostable material in the fluid state into the moulding chamber;
an ejector system (80), for causing separation of the formed container body (2) from the at least one core (72),
the equipment (20) moreover comprising:
a fluidic heating system (42, 42a, 51-54, 60, 61) of the first mould part (40);
a fluidic cooling system (43, 43a, 44, 44a, 72a, 73-76, 82-84, 86, 87) of the second mould part (41), prearranged for cooling at least one outer surface of the at least one core (72) in the course of a moulding operation,
wherein the fluidic heating system (42, 42a, 51-54, 60, 61) of the first mould part (40) is configured for heating at least one surface of the at least one cavity (56) in the course of said moulding operation.

11. The equipment according to Claim 10, wherein said fluidic systems are prearranged for causing to circulate simultaneously, in the course of at least one and the same step of the moulding operation, the heating fluid in the first mould part (40) and the cooling fluid in the second mould part (41), said at least one and the same step of the moulding operation comprising in particular at least one of steps d), e) and f).

12. The equipment according to Claim 10 or Claim 11, further comprising an arrangement (45, 45a, 82, 83, 85, 88-90) for generating and directing a flow of a cooling fluid onto the formed container body (2), the arrangement being preferably at least in part associated to the second mould part (49), very preferably to an ejector plate (80) thereof.

13. The equipment according to any one of Claims10-12, wherein the fluidic cooling system comprises an internal cavity (72a) of the at least one core (72), said internal cavity (72a) being in particular divided into at least two half-cavities in fluid communication with one another.

14. The equipment according to any one of Claims10-13, wherein at least one of the fluidic heating system and the fluidic cooling system comprises an insert (52, 82) housed in a corresponding recess (51, 81) of the respective mould part (40, 41), the insert (52, 82) and the corresponding recess (51, 81) being shaped for defining between them at least one channel (54, 84) for passage of the heating or cooling fluid, respectively, the recess (81) of the second mould part (41) being preferably a through recess of an ejector plate (80).

15. The equipment according to any one of Claims 11-14, wherein the arrangement (45, 45a, 82, 83, 85, 88-90) for generating and directing a flow of a cooling fluid comprises an insert (82) housed in a corresponding recess (81) of the second mould part (41), the insert (82) and the corresponding recess (81) being shaped for defining between them at least one channel (84) that is in fluid communication with one or more passages (90) that open at a front of the insert itself, the recess (82) of the second mould part (41) being preferably a through recess of an ejector plate (80).

## Patentansprüche

1. Verfahren zum Spritzgießen von becherförmigen Behälterkörpern (2) für Vorstufenmaterialien von flüssigen Nahrungsmittelprodukten, insbesondere für Kapseln für Kaffee und lösbare Produkte, mit:
a) Bereitstellen eines ersten Formwerkzeugteils (40) mit mindestens einem Hohlraum (56) und eines zweiten Formwerkzeugteils (41) mit mindestens einem Kern (72), wobei der Kern (72) durch den Hohlraum (56) zur Abgrenzung zumindest eines Teils einer entsprechenden Gießkammer zumindest teilweise aufnehmbar ist;
b) Schließen des ersten und des zweiten Formwerkzeugteils (40, 41) zum Abgrenzen der Gießkammer;
c) Einspritzen eines Materials in fluidem Zustand in die Gießkammer zur Formung des Behälterkörpers (2);
d) Warten auf zumindest eine teilweise Verfestigung des Materials;
e) Öffnen des ersten und des zweiten Formwerkzeugteils (40, 41), wobei sich der geformte Behälterkörper (2) auf dem Kern (72) befindet; und
f) Abnehmen des geformten Behälterkörpers (2) von dem Kern (72),
wobei im Verlaufe des Gießvorgangs ein kühlendes Fluid in dem zweiten Formwerkzeugteil (41) zum Kühlen zumindest einer Außenfläche des mindestens einen Kerns (72) zirkuliert wird;
**dadurch gekennzeichnet, dass**:
- das im fluiden Zustand in die Gießkammer im Schritt c) eingespritzte Material ein kompostierbares Material ist, und
- im Verlaufe des Gießvorgangs ein wärmendes Fluid in dem ersten Formwerkzeugteil (40) zum Erwärmen mindestens einer Oberfläche des mindestens einen Hohlraums (56) zirkuliert wird.

2. Verfahren nach Anspruch 1, wobei das wärmende Fluid und das kühlende Fluid entsprechend in dem ersten Formwerkzeugteil (40) und in dem zweiten Formwerkzeugteil (41) im Verlaufe des ein und desselben Schritts des Gießvorgangs gleichzeitig zirkuliert werden.

3. Verfahren nach Anspruch 2, wobei der mindestens ein und derselbe Schritt des Gießvorgangs mindestens einen der Schritte d), e) und f) umfasst.

4. Verfahren nach einem der Ansprüche 1-3, wobei das Zirkulieren des kühlenden Fluids im Verlaufe des Schritts c) und für mindestens einen wesentlichen Teil des Schritts d) unterbrochen wird.

5. Verfahren nach Anspruch 1, wobei im Verlaufe der Schritte e) und/oder f) eine Strömung eines kühlenden Fluids, insbesondere eines Gases, auf den geformten Behälterkörper (2) gerichtet wird.

6. Verfahren nach Anspruch 1, wobei:
das wärmende Fluid zumindest im Verlaufe der Schritte b), c), d) und e) zur Erwärmung der mindestens einen Oberfläche des mindestens einen Hohlraums (56) zirkuliert wird, und
das Zirkulieren des kühlenden Fluids zumindest im Verlaufe des Schritts c) und vorzugsweise auch im Verlaufe eines wesentlichen Teils des Schritt d) unterbrochen wird.

7. Verfahren nach Anspruch 8, wobei das Zirkulieren des kühlenden Fluids auch während des Schritts d) unterbrochen wird.

8. Verfahren nach einem der vorhergehenden Ansprüche, wobei:
das wärmende Fluid zumindest im Verlaufe der Schritte b), c), d) und e) auf eine Erwärmungstemperatur, insbesondere eine im Wesentlichen konstante Erwärmungstemperatur, temperaturgeregelt wird; und
das kühlende Fluid im Verlaufe der Schritte e) und f) und vorzugsweise auch in einer Endphase des Schritts d) auf eine Kühltemperatur, insbesondere eine im Wesentlichen konstante Kühltemperatur, temperaturgeregelt wird.

9. Verfahren nach einem der vorhergehenden Ansprüche, wobei das kompostierbare Material eine Mischung mit einer Basis aus Polymilchsäure, vorzugsweise einer Mischung mit einer Basis aus linksdrehender Poly-L-Milchsäure, ist.

10. Anlage zum Ausführen des Verfahrens nach einem oder mehreren der vorhergehenden Ansprüche, mit:
einem Formwerkzeug (22), das ein erstes Formwerkzeugteil (40) und ein zweites Formwerkzeugteil (41) aufweist, wovon mindestens eines relativ zu dem anderen zwischen einer Stellung zum Öffnen und einer Stellung zum Schließen des Formwerkzeugs (22) bewegbar ist, wobei das erste Formwerkzeugteil (40) mindestens einen Hohlraum (56) und das zweite Formwerkzeugteil (41) mindestens einen Kern (72) hat, der zumindest teilweise von dem Hohlraum (56) zur Abgrenzung zumindest eines Teils einer entsprechenden Gießkammer aufnehmbar ist;
einem Betätigungssystem (23) zum Bewirken von Verschiebungen zwischen dem ersten Formwerkzeugteil (40) und dem zweiten Formwerkzeugteil (41) zwischen der Stellung zum Öffnen und der Stellung zum Schließen des Formwerkzeugs (22);
einem Einspritzsystem (21) zum Einspritzen eines kompostierbaren Materials in fluidem Zustand in die Gießkammer,
einem Auswurfsystem (80) zum Bewirken einer Trennung des geformten Behälterkörpers (2) von dem mindestens einen Kern (72),
wobei die Anlage (20) ferner aufweist:
ein fluidisches Heizsystem (42, 42a, 51-54, 60, 61) des ersten Formwerkzeugteils (40);
ein fluidisches Kühlsystem (43, 43a, 44, 44a; 72a, 73-76, 82-84, 86, 87) des zweiten Formwerkzeugteils (41), das zum Kühlen zumindest einer Außenfläche des mindestens einen Kerns (72) im Verlaufe eines Gießvorgangs ausgebildet ist,
wobei das fluidische Heizsystem (42, 42a, 51-54, 60, 61) des ersten Formwerkzeugteils (40) ausgebildet ist, mindestens eine Oberfläche des mindestens einen Hohlraums (56) im Verlauf des Gießvorgangs zu erwärmen.

11. Anlage nach Anspruch 10, wobei die fluidischen Systeme ausgebildet sind zu bewirken, dass im Verlaufe zumindest ein und desselben Schritts des Gießvorgangs das wärmende Fluid in dem ersten Formwerkzeugteil (40) und das kühlende Fluid in dem zweiten Formwerkzeugteil (41) gleichzeitig zirkulieren, wobei der mindestens ein und derselbe Schritt des Gießvorgangs insbesondere mindestens einen der Schritte d), e) und f) umfasst.

12. Anlage nach Anspruch 10 oder Anspruch 11, die ferner eine Anordnung (45, 45a, 82, 83, 85, 88-90) zur Erzeugung und zur Lenkung einer Strömung eines kühlenden Fluids auf den geformten Behälterkörper (2) aufweist, wobei die Anordnung vorzugsweise zumindest teilweise mit dem zweiten Formwerkzeugteil (49), besonders bevorzugt mit einer Auswurfplatte (80) davon, verbunden ist.

13. Anlage nach einem der Ansprüche 10-12, wobei das fluidische Kühlsystem einen inneren Hohlraum (72a) des mindestens einen Kerns (72) beinhaltet, wobei der innere Hohlraum (72a) insbesondere in mindestens zwei Hohlraumhälften, die miteinander in Fluidverbindung stehen, unterteilt ist.

14. Anlage nach einem der Ansprüche 10-13, wobei das fluidische Heizsystem und/oder das fluidische Kühlsystem einen Einschub (52, 82) aufweisen, der in einer entsprechenden Aussparung (51, 81) des jeweiligen Formwerkzeugteils (40, 41) untergebracht ist, wobei der Einschub (52, 82) und die entsprechende Aussparung (51, 81) derart geformt sind, dass zwischen ihnen mindestens ein Kanal (54, 84) zum Durchlassen des wärmenden oder kühlenden Fluids gebildet ist, wobei die Aussparung (81) des zweiten Formwerkzeugteils (41) vorzugsweise eine Durchgangsaussparung einer Auswurfplatte (80) ist.

15. Anlage nach einem der Ansprüche 11-14, wobei die Anordnung (45, 45a, 82, 83, 85, 88-90) zum Erzeugen und Lenken einer Strömung eines kühlenden Fluids einen Einschub (82), der in einer entsprechenden Aussparung (81) des zweiten Formwerkzeugteils (41) untergebracht ist, aufweist, wobei der Einschub (82) und die entsprechende Aussparung (81) derart geformt sind, dass zwischen ihnen mindestens ein Kanal (84) gebildet ist, der mit einem oder mehreren Durchgängen (90) in Fluidverbindung steht, die an einer Vorderseite des Einschubs selbst offen sind, wobei die Aussparung (82) des zweiten Formwerkzeugteils (41) vorzugsweise eine Durchgangsaussparung einer Auswurfplatte (80) ist.

## Revendications

1. Procédé pour le moulage par injection de corps de récipients en forme de bol (2) pour des précurseurs de produits alimentaires liquides, en particulier des capsules pour café et produits solubles, consistant à :
a) fournir une première partie de moule (40) ayant au moins une cavité (56) et une seconde partie de moule (41) ayant au moins un noyau (72), le noyau (72) pouvant être au moins partiellement reçu par la cavité (56) pour délimiter avec celle-ci au moins une partie d'une chambre de moulage correspondante ;
b) fermer les première et seconde parties de moule (40, 41) pour délimiter la chambre de moulage ;
c) injecter un matériau dans l'état fluide dans la chambre de moulage pour former le corps de récipient (2) ;
d) attendre au moins une solidification partielle du matériau ;
e) ouvrir les première et seconde parties de moule (40, 41), avec le corps de récipient formé (2) sur le noyau (72) ; et
f) retirer le corps de récipient formé (2) du noyau (72),
dans lequel, au cours d'une opération de moulage, un fluide de refroidissement est mis à circuler dans la seconde partie de moule (41) pour refroidir au moins une surface externe du au moins un noyau (72) ;
**caractérisé en ce que** :
- le matériau injecté dans l'état fluide dans la chambre de moulage au cours de l'étape c) est un matériau compostable, et
- au cours de ladite opération de moulage un fluide de chauffage est mis à circuler dans la première partie de moule (40) pour chauffer au moins une surface de la au moins une cavité (56).

2. Procédé selon la revendication 1, dans lequel le fluide de chauffage et le fluide de refroidissement sont mis à circuler simultanément dans la première partie de moule (40) et dans la seconde partie de moule (41), respectivement, au cours d'au moins une et la même étape de ladite opération de moulage.

3. Procédé selon la revendication 2, dans lequel ladite au moins une et la même étape de l'opération de moulage comprend au moins une des étapes d), e) et f).

4. Procédé selon l'une quelconque des revendications 1-3, dans lequel la circulation du fluide de refroidissement est interrompue au cours de l'étape c) et au moins pendant une partie dominante de l'étape d).

5. Procédé selon la revendication 1, dans lequel, au cours d'au moins une des étapes e) et f), un écoulement d'un fluide de refroidissement, en particulier d'un gaz, est dirigé sur le corps de récipient formé (2).

6. Procédé selon la revendication 1, dans lequel :
le fluide de chauffage est mis à circuler au moins au cours des étapes b), c), d), et e) pour chauffer ladite au moins une surface de la au moins une cavité (56), et
la circulation du fluide de refroidissement est suspendue au moins au cours de l'étape c) et, de préférence, également au cours d'une portion substantielle de l'étape d).

7. Procédé selon la revendication 8, dans lequel la circulation du fluide de refroidissement est suspendue également pendant l'étape b).

8. Procédé selon l'une quelconque des revendications précédentes, dans lequel :
le fluide de chauffage est thermorégulé à une température de chauffage, en particulier une température de chauffage substantiellement constante, au moins au cours des étapes b), c), d), et e) ; et
le fluide de refroidissement est thermorégulé à une température de refroidissement, en particulier une température de refroidissement substantiellement constante, au cours des étapes e), et f), et de préférence également dans une phase terminale de l'étape d).

9. Procédé selon l'une quelconque des revendications précédentes, dans lequel le matériau compostable est un mélange avec une base de poly(acide lactique), de préférence un mélange avec une base de poly(acide L-lactique) lévogyre.

10. Equipement pour la réalisation du procédé selon l'une quelconque des revendications précédentes, comprenant :
un moule (22) qui inclut une première partie de moule (40) et une seconde partie de moule (41), dont au moins une est déplaçable par rapport à l'autre entre une position d'ouverture et une position de fermeture du moule (22), la première partie de moule (40) ayant au moins une cavité (56) et la seconde partie de moule (41) ayant au moins un noyau (72) qui peut être reçu au moins partiellement par la cavité (56) pour délimiter avec celle-ci au moins une partie de la chambre de moulage correspondante ;
un système d'actionnement (23) pour occasionner des déplacements entre la première partie de moule (40) et la seconde partie de moule (41), entre la position d'ouverture et la position de fermeture du moule (22) ;
un système d'injection (21) pour injecter un matériau compostable dans l'état fluide dans la chambre de moulage ;
un système d'éjecteur (80), pour occasionner la séparation du corps de récipient formé (2) du au moins un noyau (72),
l'équipement (20) comprenant de plus :
un système de chauffage fluide (42, 42a, 51-54, 60, 61) de la première partie de moule (40) ;
un système de refroidissement fluide (43, 43a, 44, 44a, 72a, 73-76, 82-84, 86, 87) de la seconde partie de moule (41), pré-agencé pour refroidir au moins une surface externe du au moins un noyau (72) au cours d'une opération de moulage,
dans lequel le système de chauffage fluide (42, 42a, 51-54, 60, 61) de la première partie de moule (40) est configuré pour chauffer au moins une surface de la au moins une cavité (56) au cours de ladite opération de moulage.

11. Equipement selon la revendication 10, dans lequel lesdits systèmes fluides sont pré-agencés pour mettre en circulation simultanément, au cours d'au moins une et la même étape de l'opération de moulage, le fluide de chauffage dans la première partie de moule (40) et le fluide de refroidissement dans la seconde partie de moule (41), ladite au moins une et la même étape de l'opération de moulage comprenant en particulier au moins une des étapes d), e) et f).

12. Equipement selon la revendication 10 ou revendication 11, comprenant de plus un agencement (45, 45a, 82, 83, 85, 88-90) pour générer et diriger un écoulement d'un fluide de refroidissement sur le corps de récipient formé (2), l'agencement étant de préférence au moins en partie associé à la seconde partie de moule (49), bien mieux encore à une plaque d'éjecteur (80) de celle-ci.

13. Equipement selon l'une quelconque des revendications 10-12, dans lequel le système de refroidissement fluide comprend une cavité interne (72a) du au moins un noyau (72), ladite cavité interne (72a) étant en particulier divisée en au moins deux demi-cavités en communication fluide l'une avec l'autre.

14. Equipement selon l'une quelconque des revendications 10-13, dans lequel au moins un du système de chauffage fluide et du système de refroidissement fluide comprend un insert (52, 82) logé dans un renfoncement correspondant (51, 81) de la partie de moule respective (40, 41), l'insert (52, 82) et le renfoncement correspondant (51, 81) étant façonnés pour définir entre eux au moins un canal (54, 84) pour un passage du fluide de chauffage ou de refroidissement, respectivement, le renfoncement (81) de la seconde partie de moule (41) étant de préférence un renfoncement traversant d'une plaque d'éjecteur (80).

15. Equipement selon l'une quelconque des revendications 11-14, dans lequel l'agencement (45, 45a, 82, 83, 85, 88-90) pour générer et diriger un écoulement d'un fluide de refroidissement comprend un insert (82) logé dans un renfoncement correspondant (81) de la seconde partie de moule (41), l'insert (82) et le renfoncement correspondant (81) étant façonnés pour définir entre eux au moins un canal (84) qui est en communication fluide avec un ou plusieurs passages (90) qui s'ouvrent à l'avant de l'insert lui-même, le renfoncement (82) de la seconde partie de moule (41) étant de préférence un renfoncement traversant d'une plaque d'éjecteur (80).
